# DEMANDE DE BREVET EUROPEEN

(11) **EP 1 518 658 A1**
(43) Date de publication de la demande: **30.03.2005**
(21) Numéro de dépôt: 03021921.6
(22) Date de dépôt: 29.09.2003
(51) Int. Cl.: B29C 49/18, B29C 49/16, B29C 49/78

(54) **Procédé de soufflage et dispositif de mise en oeuvre**

(71) Demandeur: Technoplan Engineering S.A., 1228 Plan-Les-Ouates (CH)
(72) Inventeur: Storione, Savino, 1290 Versoix (CH); Jover, Daniel, 1197 Prangins (CH)
(74) Mandataire: Grosfillier, Philippe

(57) **Abrégé**

La présente invention concerne un procédé de soufflage d'emballage et un dispositif pour la mise en oeuvre dudit procédé.
Le procédé est caractérisé par les étapes suivantes:
-) pré-soufflage à une première pression du gaz dans une préforme (1),
-) soufflage à une deuxième pression du gaz dans la préforme pour obtenir un emballage (2);
-) balayage de l'emballage au moyen d'un gaz à une troisième pression pendant une phase de décharge;
-) maintien d'une contre-pression pendant le balayage;
-) décharge du gaz résiduel de l'emballage.

## Description

La présente invention concerne un procédé de soufflage d'emballage, par exemple des bouteilles, et un dispositif pour la mise en oeuvre dudit procédé.

Des procédés de soufflage d'emballages et des dispositifs pour la mise en oeuvre desdits procédés sont connus dans l'état de la technique.

La demande de brevet français 2 662 631, par exemple, décrit une telle machine et un tel procédé. Selon le procédé décrit, on amène une préforme fixée à un distributeur d'air dans un moule, on met le distributeur en liaison avec une source d'air en pression, ledit air s'introduisant dans la préforme de façon à plaquer les parois de la préforme contre les bords du moule, formant ainsi l'emballage désiré. Dans le procédé décrit dans cette demande, on utilise également un vérin d'étirage dont l'action combinée à celle de l'air sous pression permet une autorégulation de l'équilibre entre la déformation axiale et transversale de la préforme ce qui résulte dans un procédé combiné d'étirage et de soufflage. Dans la machine décrite dans cette demande de brevet, l'air en pression soufflé dans la préforme est également utilisé pour actionner le vérin d'étirage. Une fois l'emballage formé, l'air de soufflage est évacué à l'air libre.

La publication antérieure WO 96/25285 décrit un autre procédé de soufflage d'emballages, comme par exemple des bouteilles à partir d'une préforme. Selon le procédé connu, un procède à un pré-soufflage de la préforme à une pression comprise entre 8 à 12 bar, puis on procède au soufflage proprement dit en injectant de l'air à 40 bar. Dans ce document également, le gaz de soufflage est rejeté à l'air libre une fois que l'emballage a été formé.

La demande de brevet EP 0 039 929 décrit un procédé de soufflage d'articles moulés dans lequel le gaz de soufflage est récupéré et recyclé pour être réutilisé. Plus particulièrement, dans cette demande, le gaz de soufflage a également une fonction de traitement de la surface intérieure de l'emballage soufflé, notamment pour améliorer l'imperméabilité de ladite surface intérieure, et à cet effet il contient un réactif approprié. Une fois le soufflage/traitement effectués, on récupère le gaz de soufflage pour une réutilisation ultérieure au moyen d'un gaz de purge, ledit gaz de purge devant lui être purifié du réactif utilisé.

La demande de brevet EP 0 655 313 décrit un procédé et un dispositif de récupération d'air de soufflage. Dans le procédé décrit, l'air en haute pression qui a été utilisé pour souffler un récipient est directement récupéré dans la source à basse pression. Ceci a l'inconvénient de créer des variations de pressions dans la source à basse pression qui nuisent à la bonne formation du récipient. De plus, le récipient soufflé est maintenu pendant un faible temps à la haute pression de soufflage ce qui nuit également à la bonne qualité du récipient soufflé.

Le brevet US 5,173,241 décrit un procédé et un appareil permettant la récupération de l'air de soufflage dans une machine d'injection de matière plastique. Dans cet état de la technique, l'air soufflé est récupéré dans conteneur de récupération par aspiration et est réintroduit dans le compresseur du système.

La publication WO 99/04951 montre un procédé et une installation de fabrication de récipients par soufflage d'ébauches en matériau thermoplastique. Dans le procédé décrit, on fabrique les récipients par soufflage d'ébauches en matériau thermoplastique à l'intérieur de moules de finition dans lesquels les ébauches sont successivement introduites et les récipients successivement soufflés, le soufflage de chaque récipient comportant, après une étape de soufflage à l'aide d'un gaz sous une première pression, une étape de dégazage au moins partiel suivie d'une étape dite de balayage au cours de laquelle du gaz sous une seconde pression, inférieure à la première, est introduit dans le récipient.

Un autre procédé de balayage a été publié dans la revue PETplanet insider, Vol.4, No.5+6/03.

Finalement, la publication WO 03/009993 montre un système de soufflage d'emballages dans lequel on a prévu des moyens de récupération du gaz utilisé pour le soufflage, ce qui réduit la consommation du système en gaz comprimé.

Dans le domaine de la fabrication de bouteilles, en particulier de bouteilles en PET, l'on est confronté à un problème particulier lorsque l'on vent remplir les bouteilles soufflées avec de liquides chauds, comme des jus de fruits, du thé etc. Si l'on remplit les bouteilles soufflées avec de tels liquides à une température de l'ordre de 70°C à 95°C, on se trouve dans des températures supérieures à la température de transition vitreuse du PET (72°C à 76°C) ce qui a effet sur la qualité de la bouteille. D'une part, le PET prend une couleur laiteuse et, d'autre part, il se déforme de façon permanente, présentant même un effet mémoire qui tend à la faire revenir à sa forme initiale d'ébauche, ou paraison, selon le vocabulaire employé dans cette technique. Ainsi, sans une étape particulière, il n'est pas possible de remplir des bouteilles, et autres récipients, en PET avec des liquides de températures élevées, nécessaire pour obtenir une mise en bouteille stérile.

L'étape particulière qui a été mise au point dans le domaine du soufflage d'emballage est appelée "balayage" qui consiste à introduire dans le récipient soufflé un gaz sous une deuxième pression, égale ou inférieure à la pression de soufflage, en balayant l'intérieur du récipient par une circulation libre du gaz et en laissant s'échapper à l'extérieur. Cette étape de balayage, connu en dans l'état de la technique, est décrite par exemple dans la publication WO 99/04951, dont le contenu est incorporé par référence dans la présente demande.

Comme cette publication l'indique, il a été constaté de façon surprenante qu'un tel balayage permettait d'obtenir des récipients ayant une résistance mécanique accrue lors de leur utilisation.

Néanmoins, les procédés connus à l'heure actuelle ne permettent pas de mettre en bouteille, ou dans d'autres récipients en PET, des liquides à une température supérieure à 95° C.

Un but de l'invention est d'améliorer les procédés et dispositifs connus.

Un autre but de l'invention est de proposer un procédé et un dispositif permettant la mise en récipients PET de liquide à des températures supérieures à celles possibles actuellement.

Un autre but de l'invention est d'obtenir un procédé et un dispositif qui soient simples à fabriquer et utiliser.

Un autre but de l'invention est également de limiter l'air sous pression nécessaire pour le procédé.

Ces buts sont atteints par les procédés et dispositifs définis dans les revendications de la présente demande.

L'on s'est en effet aperçu que l'utilisation d'une contre-pression, lors de l'opération de balayage, permettait la mise en récipients PET de liquides à des températures allant jusqu'à 160°C, ce que l'on pensait impossible à réaliser par préjugé technique, alors que dans les faits, cette contre-pression autorise ces températures sans déformation notable du récipient PET. Ce progrès important permet d'envisager de nombreuses utilisations aux emballages PET qui semblaient impossibles à réaliser techniquement, dans l'état actuel de la technique.

L'invention sera mieux comprise par la description détaillée du procédé et de machine permettant la mise en oeuvre dudit procédé et des figures dans lesquelles
La figure 1 est un schéma-bloc du procédé selon l'invention;
la figure 2 est un schéma de principe d'un premier mode d'exécution d'une machine permettant la mise en oeuvre du procédé et
la figure 3 est un schéma de principe d'un deuxième mode d'exécution d'une machine permettant la mise en oeuvre du procédé.

Dans le procédé selon l'invention, on commence par une étape de pré-soufflage à une première pression du gaz dans la préforme. Cette étape est optionnelle mais préférable. Les pressions utilisées de façon classique pour cette opération de pré-soufflage sont de l'ordre de 4 à 16 bar. Une fois cette opération effectuée, on passe au soufflage proprement dit à une deuxième pression du gaz dans la préforme pour obtenir l'emballage. Les pressions employées pour cette opération de soufflage sont de l'ordre de 25 à 40 bar.

L'opération suivante consiste en la décharge partielle du gaz utilisé pour le soufflage par un système de décharge, comprenant de façon connue, des conduites et vannes appropriées. Le principe du pré-soufflage, soufflage et décharge partielle sont décrits en détail dans la publication WO 03/009993 et sont incorporés par référence dans la présente demande pour ce qui concerne ces étapes.

Une fois cette décharge partielle effectuée, l'on procède à l'opération de balayage telle que définie ci-dessus.

Pendant cette opération de balayage toutefois, l'on maintient une contre-pression, de préférence de l'ordre de 5 à 35 bar, ce qui permet d'augmenter la résistance mécanique de l'emballage, notamment sa résistance aux hautes températures. Typiquement, une opération de balayage dure de 0,2 seconde à 0,8 seconde.

Une fois l'opération de balayage terminée, on procède à la décharge de gaz restant dans l'emballage soufflé. La contre-pression peut éventuellement être maintenue aussi pendant l'opération de décharge, mais cette étape doit être bien ajustée pour ne pas trop allonger le temps total de décharge qui aura une influence sur la cadence atteinte par la machine.

La contre-pression peut être générée de façon simple par une limitation du débit de décharge ou par d'autres moyens, tels des moyens de récupération comme ceux décrits dans la publication WO 03/009993 mentionnés ci-dessus, dont le contenu est incorporé par référence dans la présente demande pour ce qui concerne le procédé de récupération du gaz de soufflage.

Lorsque les emballages sont produits avec le procédé selon l'invention, l'on peut alors remplir l'emballage, par exemple une bouteille, avec un liquide qui a une température allant jusqu'à 160°C.

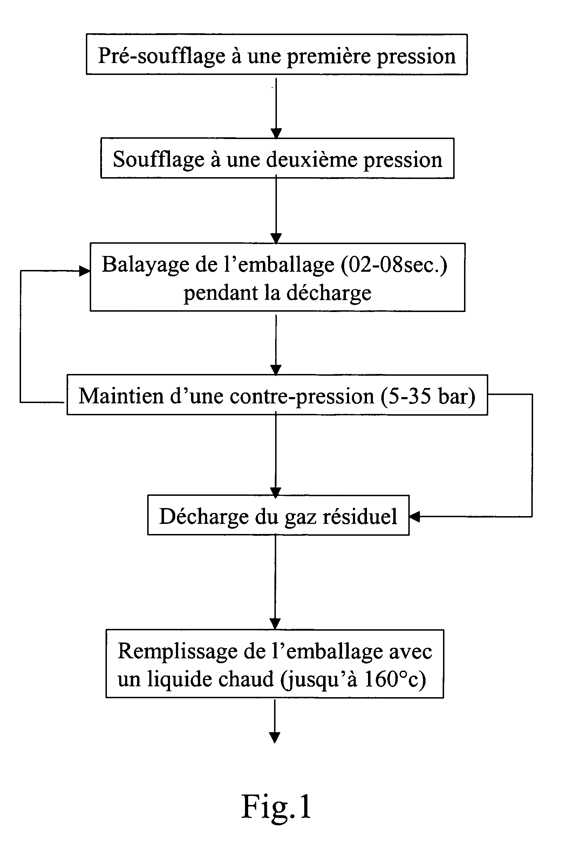

Un premier mode d'exécution schématique d'un dispositif permettant la mise en oeuvre du procédé de l'invention est décrit en référence à la figure 1. Pour ce qui concerne le fonctionnement et les moyens nécessaires à une machine de soufflage d'emballages, référence est faite à la publication WO 03/009993 déjà mentionnée, qui est incorporée par référence dans la présente demande à cet effet. Dans le dispositif (montré par exemple en figure 1 de WO 03/009993) on apporte un gaz, par exemple de l'air, à une première pression, dite pression de pré-soufflage comprise entre 4 à 16 bar, pour le pré-soufflage d'une préforme dans un moule 1 au travers d'une vanne de pré-soufflage, puis on amène du gaz, par exemple de l'air, à une seconde pression, dite pression de soufflage de l'ordre de 25 à 40 bar, pour le soufflage de l'emballage 2 lui-même dans le moule, au travers d'une vanne de soufflage. La pression de soufflage dépend notamment de la complexité de l'emballage 2 à souffler: plus la forme est simple et sans détails particuliers et plus la pression de soufflage peut être faible. Une fois que l'emballage 2 a été soufflé, le gaz dans l'emballage qui est à la pression de soufflage, est ensuite déchargé de l'emballage au moins partiellement par des moyens de décharge, à savoir au moins un conduit de décharge 3 et une vanne de décharge 4. Puis on procède à l'opération de balayage, et pendant cette phase de balayage, on régule le débit de décharge par un limiteur de décharge 5, celui-ci étant suivi par un échappement 6 à l'air libre.

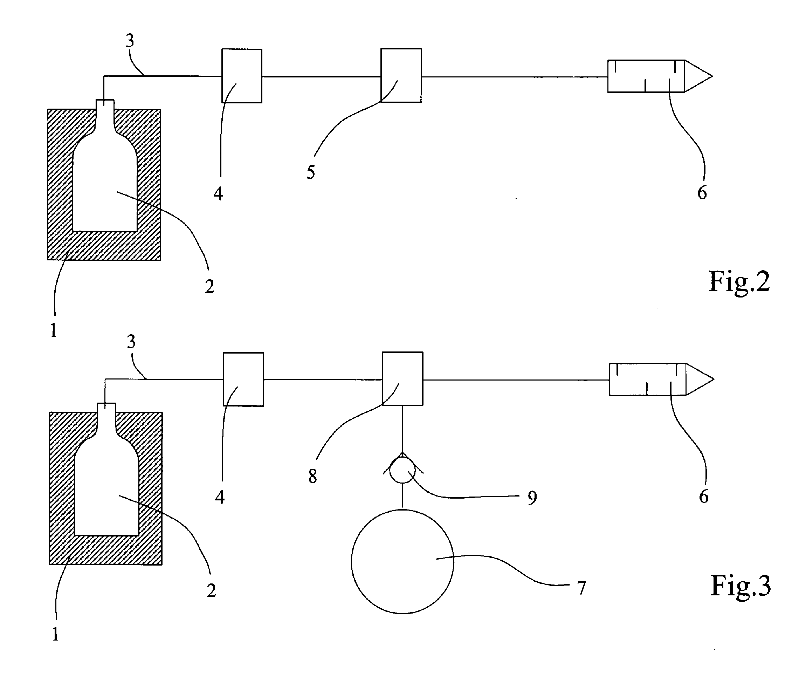

Dans le deuxième mode d'exécution de la figure 3, le principe est similaire à celui de la figure 2, et fait appel à la technologie enseignée par WO 03/009993 en ce que le limiteur de débit 5 du mode d'exécution de la figure 2 est remplacé par un système de récupération, schématisé par la référence 7, similaire à celui connu de WO 03/009993 et dont l'enseignement est incorporé à la présente demande par référence. Ainsi, dans ce mode, la contre-pression est générée par la pression interne du système de récupération 7 et non plus par un limiteur de pression. Dans le mode représenté, on utilise une vanne de récupération 8 suivie d'une vanne anti-retour 9 pour empêcher la décharge du système de récupération 7.

Bien entendu, la présente demande et les revendications ne sont pas limitées aux modes d'exécution indiqués, donnés à titre d'exemples non-limitatifs, mais d'autres variantes sont possibles, aussi mettant en oeuvre des moyens équivalents.

## Revendications

1. Procédé de soufflage au moyen d'un gaz d'un emballage dans un moule à partir d'une préforme, **caractérisé par** les étapes suivantes:
- ) pré-soufflage à une première pression du gaz dans la préforme;
- ) soufflage à une deuxième pression du gaz dans la préforme pour obtenir l'emballage (2) ;
- ) balayage de l'emballage au moyen d'un gaz à une troisième pression pendant une phase de décharge;
- ) maintien d'une contre-pression pendant le balayage;
- ) décharge du gaz résiduel de l'emballage.

2. Procédé selon la revendication 1, dans lequel on maintient la contre-pression aussi pendant la décharge du gaz résiduel.

3. Procédé selon la revendication 1, dans lequel on maintient la contre-pression par limitation du débit de décharge.

4. Procédé selon la revendication 1, dans lequel on maintient la contre-pression par un système de récupération du gaz de décharge (7,8,9).

5. Procédé selon l'une des revendications précédentes, dans lequel la phase de balayage dure de 0,2 seconde à 0,8 seconde.

6. Procédé selon l'une des revendications précédentes, dans lequel la contre-pression vaut de 5 à 35 bar.

7. Procédé selon l'une des revendications précédentes, dans lequel, une fois que la détente du gaz résiduel a été effectuée, on remplit l'emballage (2) avec un liquide à une température prédéterminée.

8. Procédé selon la revendication 7, dans lequel la température prédéterminée vaut jusqu'à 160°C.

9. Dispositif de soufflage d'emballages, en particulier de bouteilles, à partir d'une préforme (1) au moyen d'un gaz, comprenant au moins des moyens pour alimenter le dispositif en gaz à une première pression et à une deuxième pression, des moyens d'étirage et de moyens de formage de l'emballage (2), et des moyens de balayage dudit emballage à une troisième pression et des moyens de décharge (4, 6) dudit gaz, ledit dispositif comportant en outre des moyens (5;7,8,9) aptes à créer une contre-pression à la décharge au moins pendant le balayage.

10. Dispositif selon la revendication 9, dans lequel les moyens aptes à créer une contre-pression comprennent un limiteur de débit (5).

11. Dispositif selon la revendication 9, dans lequel les moyens aptes à créer une contre-pression comprennent un système de récupération (7,8,9) du gaz déchargé.
